# EUROPEAN PATENT APPLICATION

(11) **EP 4 451 231 A1**
(43) Date of publication of application: **23.10.2024**
(21) Application number: 23213289.4
(22) Date of filing: 30.11.2023
(51) Int. Cl.: G06V 10/774, G06V 10/778, G06V 10/82, G06V 20/56

(54) **VEHICLE AUTONOMOUS DRIVING PERCEPTION SELF-LEARNING METHOD AND APPARATUS, AND ELECTRONIC DEVICE**

(30) Priority: 19.04.2023 CN 202310430817
(71) Applicant: Chongqing Changan Automobile Co., Ltd., Chongqing 400023 (CN)
(72) Inventor: HAN, Sanchu, Chongqing 400023 (CN); HAO, Jinlong, Chongqing 400023 (CN); ZHENG, Bo, Chongqing 400023 (CN); LONG, Pengyu, Chongqing 400023 (CN)
(74) Representative: M. Zardi & Co S.A.

(57) **Abstract**

A vehicle autonomous driving perception self-learning method and apparatus, and an electronic device are provided. The method includes: performing scenario reconstruction according to artificially constructed scenario data and real scenario data to obtain a virtual scenario, and obtaining true value data according to a real position and category of each target in the virtual scenario; rendering the virtual scenario to obtain a rendering result, and inputting the rendering result into an initial perception model to obtain perception prediction data; comparing the true value data and the perception prediction data on the basis of an overall recognition error policy and a local recognition error policy, when it is determined that there is a missing recognition target and/or a misrecognition target in the perception prediction data according to a comparison result, taking the missing recognition target and/or the misrecognition target as hard sample data, taking a scenario where the missing recognition target and/or the misrecognition target is located as a hard sample scenario, and performing driving perception self-learning on the initial perception model according to the hard sample data and the hard sample scenario until the initial perception model satisfies a preset learning end condition.

## Description

### Field of the Invention

The present application relates to the technical field of autonomous driving data closed loop, and in particular, to a vehicle autonomous driving perception self-learning method and apparatus, and an electronic device.

### Background of the Invention

At present, a perception approach for mass production of autonomous driving is mainly based on post fusion technology of vision and LiDAR perception. That is, target recognition is first performed through vision and radar respectively to independently generate respective target data; then, results are fused in a fusion module through a target fusion algorithm; and finally, a target fusion result is generated.

With continuous progress of autonomous driving perception algorithms, multi-sensor pre-fusion technology based on radar and vision is gradually being applied in autonomous driving services. The so-called pre-fusion is to fuse sensor data on the premise of spatial and temporal synchronization, and then to predict through the same model to obtain a result layer target with multi-dimensional comprehensive attributes. For example, data of a camera, a LiDAR, and a millimeter wave radar are fused to obtain a target with color information, shape information, and motion information (that is, image Red-Green-Blue (RGB), LiDAR three-dimensional information, and millimeter wave distance velocity information are fused).

Compared with the post fusion, the pre-fusion has higher requirements on the data required for model training. The requirements of a pre-fusion algorithm can only be met by synchronous labeling multi-sensor data under a time alignment condition. During developing an autonomous driving algorithm, no matter it is the post fusion or the pre-fusion, massive data are required for training a perception algorithm model, which undoubtedly poses huge costs. Therefore, an industry gradually starts exploring to reduce labeling costs during Artificial Intelligence (AI) training by various means.

In a related technology, a method for training and constructing a virtual millimeter wave radar data set through LiDAR data is provided, which can only be used for constructing an AI training data set of a millimeter wave algorithm, but cannot be applied to constructing a LiDAR and visual data set.

In a related technology, a simulation data-based data accumulation method is further provided, which can only be used for the training and iteration of a planning control algorithm, but cannot be used for the iteration of a perception algorithm.

### Summary of the Invention

The present application provides a vehicle autonomous driving perception self-learning method and apparatus, and an electronic device, which solves the problems in related technologies that real vehicle data collection and labeling have high costs, cannot be applied to construction of LiDAR and visual data sets, and cannot be used for iteration of perception algorithms, improves the iteration efficiency of an autonomous driving perception algorithm, and realizes low-cost autonomous driving perception self-learning.

A first aspect of the present application provides a vehicle autonomous driving perception self-learning method, which includes the following steps: acquiring artificially constructed scenario data and real scenario data, performing scenario reconstruction according to the artificially constructed scenario data and the real scenario data to obtain a virtual scenario, and obtaining true value data according to a real position and category of each target in the virtual scenario; rendering the virtual scenario to obtain a rendering result, and inputting the rendering result into an initial perception model to obtain perception prediction data; comparing the true value data and the perception prediction data on the basis of an overall recognition error policy and a local recognition error policy, and determining whether there is a missing recognition target and/or a misrecognition target in the perception prediction data according to a comparison result; and taking the missing recognition target and/or the misrecognition target as hard sample data and taking a scenario where the missing recognition target and/or the misrecognition target is located as a hard sample scenario in a case that there is the missing recognition target and/or the misrecognition target, and performing driving perception self-learning on the initial perception model according to the hard sample data and the hard sample scenario until the initial perception model satisfies a preset learning end condition.

According to the above technical means, the problems in related technologies that real vehicle data collection and labeling have high costs, cannot be applied to construction of LiDAR and visual data sets, and cannot be used for iteration of perception algorithms are solved, the iteration efficiency of an autonomous driving perception algorithm is improved, and low-cost autonomous driving perception self-learning is realized.

Further, the performing driving perception self-learning on the initial perception model according to the hard sample data and the hard sample scenario includes: performing scenario reconstruction again according to the hard sample scenario, the artificially constructed scenario data, and the real scenario data to obtain a new virtual scenario; and rendering the new virtual scenario to obtain a new rendering result, and performing the driving perception self-learning on the initial perception model by taking the new rendering result and the hard sample data as an input of the initial perception model.

According to the above technical means, continuous training is performed on the model by adding the scenario reconstruction-based hard sample data to a training data set for the initial perception model, which realizes continuous updating of the perception model, and achieves self-evolution of a perception algorithm.

Further, after the determining whether there is a missing recognition target and/or a misrecognition target in the perception prediction data according to a comparison result, the method further includes: determining that the initial perception model satisfies the preset learning end condition in a case that there is no missing recognition target and/or misrecognition target.

According to the above technical means, whether the initial perception model satisfies the preset learning end condition is determined through an overall recognition error policy and a local recognition error policy, which improves the iteration efficiency of an autonomous driving perception algorithm.

Further, the performing scenario reconstruction according to the artificially constructed scenario data and the real scenario data to obtain a virtual scenario includes: acquiring static scenario data in a virtual city map and dynamic scenario data in a scenario database; and performing the scenario reconstruction on the artificially constructed scenario data and the real scenario data according to the static scenario data and the dynamic scenario data to obtain the virtual scenario.

According to the above technical means, the static scenario data and the dynamic scenario data are loaded, so that output vehicle information-containing expected perception data is more accurate.

Further, the rendering the virtual scenario to obtain a rendering result includes: acquiring static environment material information and dynamic traffic participant material information on the basis of the virtual scenario; and respectively rendering the static environment material information and the dynamic traffic participant material information on the basis of a preset rendering policy to obtain the rendering result.

According to the above technical means, realistic reconstruction is realized through the preset rendering policy, so that an expected perception result is more accurate.

Further, the preset rendering policy includes at least one of a front view rendering policy, a back view rendering policy, a perimeter rendering policy, a surround view rendering policy, a LiDAR rendering policy, or a millimeter wave radar rendering policy.

According to the above technical means, the static environment material information and the dynamic traffic participant material information are rendered through the preset rendering policy, so that a pre-constructed rendering module is constructed realistically.

Further, before inputting the rendering result into the initial perception model, the further includes: acquiring training sample data, the training sample data including a labeled sample data set and/or a virtual sample data set; and training a preset perception network on the basis of the labeled sample data set and/or the virtual sample data set to obtain the initial perception model.

According to the above technical means, the virtual sample data required for autonomous driving perception algorithm training (especially pre-fusion algorithm training) can be constructed and expanded quickly, so as to improve the iteration efficiency of the autonomous driving perception algorithm.

Further, the acquiring a labeled sample data set and/or a virtual sample data set includes: collecting road test vehicle data and/or CornerCase data; performing frame extraction and alignment processing on the road test vehicle data and/or the CornerCase data, and labeling the aligned road test vehicle data and/or CornerCase data through a 2-Dimensional (2D) image and/or a 3-Dimensional (3D) laser point cloud to obtain a 2D target labeling result, a 2D segmentation labeling result, a 3D target labeling result, and a 3D segmentation labeling result; respectively matching the 2D target labeling result, the 2D segmentation labeling result, the 3D target labeling result, and the 3D segmentation labeling result with the 2D image and the 3D laser point cloud one by one to obtain a 2D target detection data set, a 2D semantic segmentation data set, a 3D point cloud target detection data set, and a 3D semantic segmentation data set, and obtaining the labeled sample data set according to the 2D target detection data set, the 2D semantic segmentation data set, the 3D point cloud target detection data set, and the 3D semantic segmentation data set; and performing mapping and matching on the 2D target labeling result, the 2D segmentation labeling result, the 3D target labeling result, and the 3D segmentation labeling result according to a preset policy to obtain a 3D position-based labeling result, and constructing the virtual sample data set by taking the 2D image and the 3D laser point cloud as an input and the 3D position-based labeling result as an output.

According to the above technical means, the real vehicle data collection and labeling costs are reduced.

Further, before inputting the rendering result into the initial perception model, the method further includes: loading static scenario data in a virtual city map and dynamic scenario data in a scenario database to obtain environment information and target information; rendering a target sensor according to the environment information and the target information to obtain a rendering result, and aligning the rendering result with the environment information and the target information to obtain alignment data; performing data sampling on the alignment data, and constructing a fused perception data set on the basis of sampled data; acquiring a 3D target and scenario information of a simulation output, mapping the 3D target and the scenario information of the simulation output to the rendering result in sequence to obtain a labeling result corresponding to a 2D sensor, and constructing an independent perception data set on the basis of the labeling result corresponding to the 2D sensor; and training the preset perception network by taking the fused perception data set and/or the independent perception data set as training sample data to obtain the initial perception model.

According to the above technical means, a training data set for a perception model is acquired.

A second aspect of the present application provides a vehicle autonomous driving perception self-learning apparatus, which includes: a reconstruction module, configured to acquire artificially constructed scenario data and real scenario data, perform scenario reconstruction according to the artificially constructed scenario data and the real scenario data to obtain a virtual scenario, and obtain true value data according to a real position and category of each target in the virtual scenario; a rendering module, configured to render the virtual scenario to obtain a rendering result, and input the rendering result into an initial perception model to obtain perception prediction data; a comparison module, configured to compare the true value data and the perception prediction data on the basis of an overall recognition error policy and a local recognition error policy, and determine whether there is a missing recognition target and/or a misrecognition target in the perception prediction data according to a comparison result; and a self-learning module, configured to take the missing recognition target and/or the misrecognition target as hard sample data and take a scenario where the missing recognition target and/or the misrecognition target is located as a hard sample scenario in a case that there is the missing recognition target and/or the misrecognition target, and perform driving perception self-learning on the initial perception model according to the hard sample data and the hard sample scenario until the initial perception model satisfies a preset learning end condition.

Further, in addition to performing the driving perception self-learning on the initial perception model according to the hard sample data and the hard sample scenario, the self-learning module is further configured to: perform scenario reconstruction again according to the hard sample scenario, the artificially constructed scenario data, and the real scenario data to obtain a new virtual scenario; and render the new virtual scenario to obtain a new rendering result, and perform the driving perception self-learning on the initial perception model by taking the new rendering result and the hard sample data as an input of the initial perception model.

Further, after determining whether there is a missing recognition target and/or a misrecognition target in the perception prediction data according to the comparison result, the comparison module is further configured to: determine that the initial perception model satisfies the preset learning end condition in a case that there is no missing recognition target and/or misrecognition target.

Further, in addition to performing the scenario reconstruction according to the artificially constructed scenario data and the real scenario data to obtain the virtual scenario, the reconstruction module is further configured to: acquire static scenario data in a virtual city map and dynamic scenario data in a scenario database; and perform the scenario reconstruction on the artificially constructed scenario data and the real scenario data according to the static scenario data and the dynamic scenario data to obtain the virtual scenario.

Further, in addition to rendering the virtual scenario to obtain the rendering result, the rendering module is further configured to: acquire static environment material information and dynamic traffic participant material information on the basis of the virtual scenario; and respectively render the static environment material information and the dynamic traffic participant material information on the basis of a preset rendering policy to obtain the rendering result.

Further, the preset rendering policy includes at least one of a front view rendering policy, a back view rendering policy, a perimeter rendering policy, a surround view rendering policy, a LiDAR rendering policy, or a millimeter wave radar rendering policy.

Further, before inputting the rendering result into the initial perception model, the rendering module is further configured to: acquire training sample data, the training sample data comprising a labeled sample data set and/or a virtual sample data set; and train a preset perception network on the basis of the labeled sample data set and/or the virtual sample data set to obtain the initial perception model.

Further, the rendering module is further configured to: collect road test vehicle data and/or CornerCase data; perform frame extraction and alignment processing on the road test vehicle data and/or the CornerCase data, and label the aligned road test vehicle data and/or CornerCase data through a 2D image and/or a 3D laser point cloud to obtain a 2D target labeling result, a 2D segmentation labeling result, a 3D target labeling result, and a 3D segmentation labeling result; respectively match the 2D target labeling result, the 2D segmentation labeling result, the 3D target labeling result, and the 3D segmentation labeling result with the 2D image and the 3D laser point cloud one by one to obtain a 2D target detection data set, a 2D semantic segmentation data set, a 3D point cloud target detection data set, and a 3D semantic segmentation data set, and obtain the labeled sample data set according to the 2D target detection data set, the 2D semantic segmentation data set, the 3D point cloud target detection data set, and the 3D semantic segmentation data set; and perform mapping and matching on the 2D target labeling result, the 2D segmentation labeling result, the 3D target labeling result, and the 3D segmentation labeling result according to a preset policy to obtain a 3D position-based labeling result, and construct the virtual sample data set by taking the 2D image and the 3D laser point cloud as an input and the 3D position-based labeling result as an output.

Further, before inputting the rendering result into the initial perception model, the rendering module is further configured to: load static scenario data in a virtual city map and dynamic scenario data in a scenario database to obtain environment information and target information; render a target sensor according to the environment information and the target information to obtain a rendering result, and align the rendering result with the environment information and the target information to obtain alignment data; perform data sampling on the alignment data, and construct a fused perception data set on the basis of sampled data; acquire a 3D target and scenario information of a simulation output, map the 3D target and the scenario information of the simulation output to the rendering result in sequence to obtain a labeling result corresponding to a 2D sensor, and construct an independent perception data set on the basis of the labeling result corresponding to the 2D sensor; and train the preset perception network by taking the fused perception data set and/or the independent perception data set as training sample data to obtain the initial perception model.

A third aspect of the present application provides an electronic device, comprising a memory, a processor, and a computer program stored on the memory and capable of running on the processor. The processor executes the program to implement the vehicle autonomous driving perception self-learning method as described in the above embodiments.

A fourth aspect of the present application provides a computer-readable storage medium, storing a computer program thereon. The program is executed by a processor to implement the vehicle autonomous driving perception self-learning method as described in the above embodiments.

Therefore, according to the present application, scenario reconstruction is performed according to artificially constructed scenario data and real scenario data to obtain a virtual scenario, and true value data is obtained according to a real position and category of each target in the virtual scenario; the virtual scenario is rendered to obtain a rendering result, and the rendering result is input into an initial perception model to obtain perception prediction data; and the true value data and the perception prediction data are compared on the basis of an overall recognition error policy and a local recognition error policy, whether there is a missing recognition target and/or a misrecognition target in the perception prediction data is determined according to a comparison result, the missing recognition target and/or the misrecognition target is taken as hard sample data and a scenario where the missing recognition target and/or the misrecognition target is located is taken as a hard sample scenario in a case that there is the missing recognition target and/or the misrecognition target, and driving perception self-learning is performed on the initial perception model according to the hard sample data and the hard sample scenario until the initial perception model satisfies a preset learning end condition. Therefore, the problems in related technologies that real vehicle data collection and labeling have high costs, cannot be applied to construction of LiDAR and visual data sets, and cannot be used for iteration of perception algorithms are solved, the iteration efficiency of an autonomous driving perception algorithm is improved, and low-cost autonomous driving perception self-learning is realized.

Additional aspects and advantages of the present application will be partially set forth in the following description, and some will become apparent from the following description, or will be understood by the practice of the present application.

### Brief Description of the Drawings

The above and/or additional aspects and advantages of the present application will become apparent and readily understood from the description of embodiments in combination with drawings. In the drawings:
Fig. 1 is a schematic block diagram of an overall service of vehicle autonomous driving perception self-learning according to an embodiment of the present application;
FIG. 2 is a flowchart of a vehicle autonomous driving perception self-learning method provided according to the embodiments of the present application;
FIG. 3 is a flowchart of a scenario reconstruction and simulation output service according to an embodiment of the present application;
Fig. 4 is a flowchart of an overall service of scenario reconstruction-based autonomous driving perception self-learning according to an embodiment of the present application;
Fig. 5 is a flowchart of a preparation service for an actually collected training sample according to an embodiment of the present application;
Fig. 6 is a flowchart of a vehicle autonomous driving perception self-learning method provided according to an embodiment of the present application;
Fig. 7 is a flowchart of a vehicle autonomous driving perception self-learning method provided according to an embodiment of the present application;
Fig. 8 is a schematic block diagram of a vehicle autonomous driving perception self-learning apparatus according to the embodiments of the present application; and
Fig. 9 is a schematic structural diagram of an electronic device according to an embodiment of the present application.

Reference signs in the drawings: 10-vehicle autonomous driving perception self-learning apparatus, 100-reconstruction module, 200-rendering module, 300-comparison module, 400-self-learning module, 901-memory, 902-processor, and 903-communication interface.

### Detailed Description of the Embodiments

Embodiments of the present application are described in detail below, and examples of the embodiments are shown in drawings. The same or similar reference numerals represent the same or similar elements or elements having the same or similar functions. The embodiments described below with reference to the drawings are exemplary, and are intended to explain the present application and cannot be construed as a limitation to the present application.

A vehicle autonomous driving perception self-learning method and apparatus, and an electronic device of the embodiments of the present application are described below with reference to the drawings. For the problems in related technologies that real vehicle data collection and labeling have high costs, cannot be applied to construction of LiDAR and visual data sets, and cannot be used for iteration of perception algorithms mentioned in the BACKGROUND above, the present application provides a vehicle autonomous driving perception self-learning method. In the method, scenario reconstruction is performed according to artificially constructed scenario data and real scenario data to obtain a virtual scenario, and true value data is obtained according to a real position and category of each target in the virtual scenario; the virtual scenario is rendered to obtain a rendering result, and the rendering result is input into an initial perception model to obtain perception prediction data; the true value data and the perception prediction data are compared on the basis of an overall recognition error policy and a local recognition error policy, and whether there is a missing recognition target and/or a misrecognition target in the perception prediction data is determined according to a comparison result; and the missing recognition target and/or the misrecognition target is taken as hard sample data and a scenario where the missing recognition target and/or the misrecognition target is located is taken as a hard sample scenario in a case that there is the missing recognition target and/or the misrecognition target, and driving perception self-learning is performed on the initial perception model according to the hard sample data and the hard sample scenario until the initial perception model satisfies a preset learning end condition. Therefore, the problems in related technologies that real vehicle data collection and labeling have high costs, cannot be applied to construction of LiDAR and visual data sets, and cannot be used for iteration of perception algorithms are solved, the iteration efficiency of an autonomous driving perception algorithm is improved, and low-cost autonomous driving perception self-learning is realized.

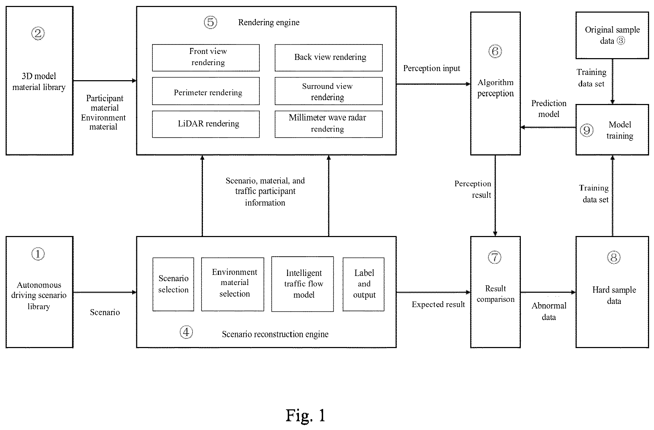

In the present embodiment, as shown in Fig. 1, the following modules are specifically included.
(1) A simulation scenario library adopts OpenX series standards and includes regulatory scenarios, true value scenarios, and CornerCase scenarios. The regulatory scenarios need to be constructed artificially, the true value scenarios need to be constructed after being collected through true value vehicles in combination with high-precision maps, and CornerCase scenarios need to be constructed after being collected by mass production of vehicles in a shadow mode.
(2) A virtual city map is used for providing static scenario data, for example, position information such as a road network and buildings, for scenario reconstruction.
(3) A 3D material scenario library includes two types, that is, static environment material information (for example, roads, traffic signs, and buildings) and dynamic traffic participant material information (for example, vehicles, pedestrians, and cyclists), is mainly used for performing rendering work of environment reconstruction, and is generally obtained by artificial construction or external procurement. The scenario library needs to record information such as a specific category and a size parameter of each environment material. There may be a plurality of specific materials in other materials of the same category, which can be selected by a rendering engine on demand.
(4) An original sample library may be acquired after real vehicle collection and artificial labeling, or may be acquired after scenario reconstruction and rendering, and is mainly used for completing training of an initial perception model.
(5) A scenario reconstruction engine is mainly responsible for loading specific scenario data, selecting environment and rendering materials, and selecting an intelligent traffic flow, transmits information such as scenario and environment information, traffic participant information, and rendering materials to a rendering module according to a specified frequency, and simultaneously transmits an expected perception result to a comparison module.
(6) The rendering engine performs perception result rendering, including, but is not limited to, visual rendering, LiDAR rendering, and the like, according to the environment, traffic participant, and material information provided by the scenario reconstruction engine, performing post-processing to realize realistic reconstruction, and transmits a reconstruction result to a perception algorithm model module.
(7) An algorithm perception module mainly predicts a rendering result through a perception model and outputs a model prediction result.
(8) A perception result comparison module mainly compares expected perception result data output by the scenario reconstruction module and a prediction result output by the algorithm perception module to find an abnormal perception result, forms scenario reconstruction-based hard sample data by taking the rendering result as a model input and the expected perception result as a model output, and simultaneously records corresponding static scenario elements and dynamic scenario elements as a corresponding hard sample scenario.
(9) A hard sample library mainly records and receives the abnormal data found by perception comparison, and labels a sample according to a scenario type and an abnormal result for a model training module to screen.
(10) The model training model performs continuous training on the model by periodically adding the scenario reconstruction-based hard sample data to a model training data set to realize continuous updating of the perception model, thereby achieving self-evolution of a perception algorithm.

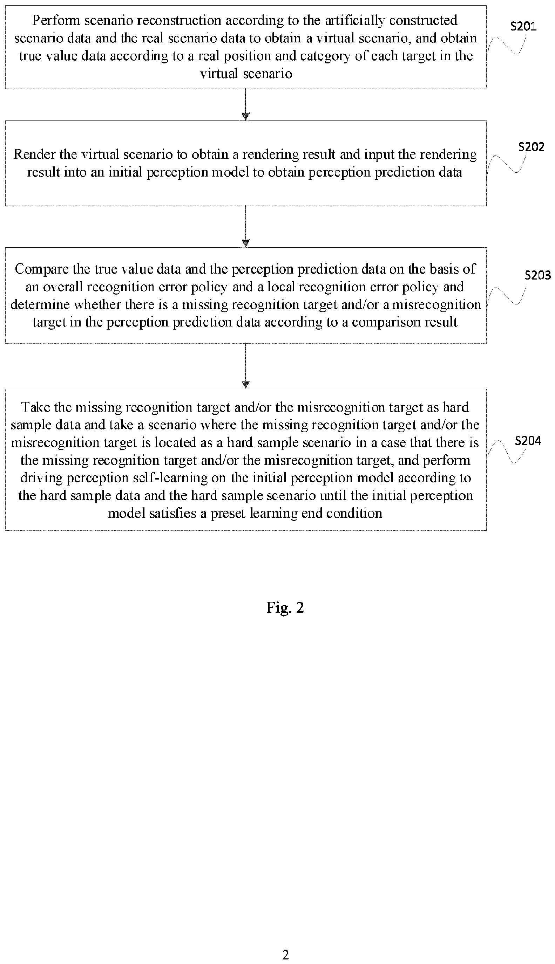

Specifically, Fig. 2 is a flowchart of a vehicle autonomous driving perception self-learning method provided by the embodiments of the present application.

As shown in Fig. 2, the vehicle autonomous driving perception self-learning method includes the following steps.

At step S201, artificially constructed scenario data and real scenario data are acquired, scenario reconstruction is performed according to the artificially constructed scenario data and the real scenario data to obtain a virtual scenario, and true value data is obtained according to a real position and category of each target in the virtual scenario.

Specifically, according to the embodiments of the present application, artificial construction scenario data is generated by artificially designing scenarios, for example, vehicle dumping and high-speed accidents, that are difficult to construct in a real world due to money cost and labor cost, and corresponding real scenario data is generated by collecting data of a real world scenario by collecting vehicles.

Further, in some embodiments, the step that the scenario reconstruction is performed according to artificially constructed scenario data and real scenario data to obtain the virtual scenario includes: static scenario data in a virtual city map and dynamic scenario data in a scenario database are acquired; and the scenario reconstruction is performed on the artificially constructed scenario data and the real scenario data according to the static scenario data and the dynamic scenario data to obtain the virtual scenario.

It is to be noted that, in the embodiments of the present application, an artificially constructed scenario and real scenario file is loaded, and scenario data information therein, including the static scenario data in the city map, for example, position information such as a road network and buildings, is parsed; the dynamic scenario data in the scenario database, for example, information such as vehicles and pedestrians, is loaded; and a scenario is reconstructed according to the static scenario data and the dynamic scenario data. A scenario reconstruction engine combines static scenario elements and dynamic scenario elements to generate the virtual scenario.

At step S202, the virtual scenario is rendered to obtain a rendering result, and the rendering result is input into an initial perception model to obtain perception prediction data.

The initial perception model here may be either a fusion perception model for pre-fusion or an independent perception model obtained by training a perception model of each independent sensor for post fusion. In an aspect, the initial perception model is applied to a vehicle end after being cropped. In the other aspect, the model is output to an algorithm perception module in Fig. 1 for performing perception recognition on the rendering result.

In some embodiments, the step that the virtual scenario is rendered to obtain a rendering result includes: static environment material information and dynamic traffic participant material information are acquired on the basis of the virtual scenario; and the static environment material information and the dynamic traffic participant material information are respectively rendered on the basis of a preset rendering policy to obtain the rendering result.

In some embodiments, the preset rendering policy includes at least one of a front view rendering policy, a back view rendering policy, a perimeter rendering policy, a surround view rendering policy, a LiDAR rendering policy, or a millimeter wave radar rendering policy.

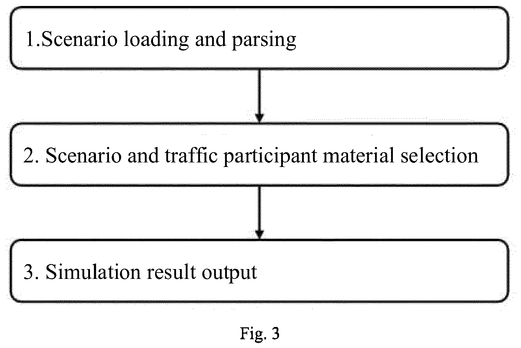

Specifically, as shown in Fig. 3, in the embodiments of the present application, the static environment material information, for example, roads, traffic signs, and buildings, and the dynamic traffic participant material information, for example, vehicles, and cyclists, in the virtual scenario are acquired; a real position and category of each target in the virtual scenario are recorded, that is, true value information is recorded for subsequent selection of 3D scenario materials; corresponding 3D model materials are selected according to the static environment material information and the dynamic traffic participant material information in the virtual scenario; and the static environment material information and the dynamic traffic participant material information are respectively rendered on the basis of the preset rendering policy to obtain the rendering result.

The 3D model materials may be selected through manual assignment, or may be randomly selected in a material library on the premise of meeting scenario requirements. Generally, in order to realize diversity of scenario rendering, a 3D model is generally selected in a random mode.

Further, in some embodiments, before the step that the rendering result is input into the initial perception model, the method further includes: static scenario data in a virtual city map and dynamic scenario data in a scenario database are loaded to obtain environment information and target information; a target sensor is rendered according to the environment information and the target information to obtain a rendering result, and the rendering result is aligned with the environment information and the target information to obtain alignment data; data sampling is performed on the alignment data, and a fused perception data set is constructed on the basis of sampled data; a 3D target and scenario information of a simulation output are acquired, the 3D target and the scenario information of the simulation output are mapped to the rendering result in sequence to obtain a labeling result corresponding to a 2D sensor, and an independent perception data set is constructed on the basis of the labeling result corresponding to the 2D sensor; and a preset perception network is trained by taking the fused perception data set and/or the independent perception data set as training sample data to obtain the initial perception model. The target sensor may be a visual sensor or LiDAR.

Specifically, in the embodiments of the present application, the static scenario data in the virtual city map and the dynamic scenario data in the scenario database are loaded, and environment information and target information relative to each frame of a main vehicle are output. A travel route of the main vehicle may be a fixed travel route, or the travel route of the main vehicle may be controlled through an autonomous driving regulatory control algorithm. The travel route of each traffic participant may be a fixed travel route, or dynamic changes of each traffic participant may be realized by loading an intelligent traffic flow.

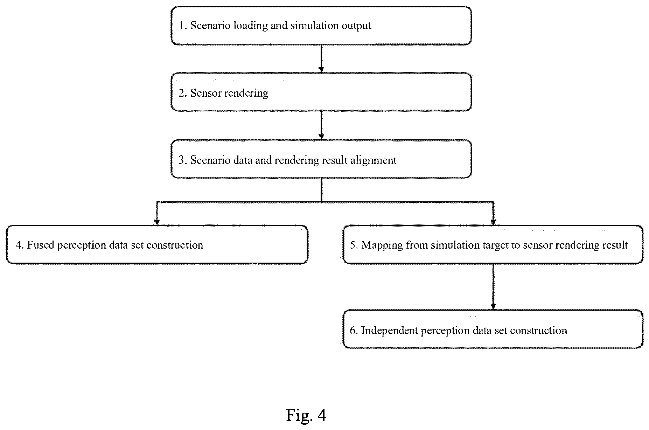

Further, as shown in Fig. 4, in the embodiments of the present application, environment information and target information are periodically transmitted to an initial perception model according to a certain frequency (for example, 100 HZ) to render a target sensor and output a rendering result of each frame. A rendering process includes initial rendering and post processing.

In a rendering process, a 3D environment and participant information constructed by simulation are mainly loaded by each rendering engine, and rendering of each sensor is completed according to a preset sensor position and a sensor parameter in combination with a dynamically selected material library. The post processing process is mainly used for solving the problem that the rendered sensor is too idealized.

Further, in the embodiments of the present application, the rendering result is aligned with the environment information and the target information, that is, the rendering result of each frame is aligned with scenario target information of each frame to realize correspondence in a sense. A fused perception data set may be constructed by performing data sampling on the aligned data and performing format conversion on the scenario target information of each frame to construct. A labeling result corresponding to the 2D sensor may be obtained by mapping a 3D target and scenario information of a simulation output to each sensor rendering result in sequence. An independent perception data set for independent model training of each sensor may be obtained by matching and sampling each piece of sensor rendering data and a mapping result in a sense. A preset perception network is trained by taking the fused perception data set and the independent perception data set as training sample data to obtain the initial perception model.

In a process of rendering the sensor, for a visual sensor, post processing is performed by increasing noise, blurring an edge of the 3D model, and the like in the embodiments of the present application.

For LiDAR, in addition to manners of increasing noise and the like, a rendered LiDAR point cloud manner may be more accordance with a real situation by simulating scanning manners thereof. The commonly used scanning manners for the LiDAR include Lissajo scanning, Spiral scanning, Hexagon scanning, and the like. It is to be noted that Lissajo scanning, Spiral scanning, Hexagon scanning, and the like can all use implementations in related technologies, which will not be described in detail here for avoiding redundancy.

In some embodiments, before the step that the rendering result is input into the initial perception model, the method further includes: training sample data is acquired, and the training sample data includes a labeled sample data set and/or a virtual sample data set; and a preset perception network is trained on the basis of the labeled sample data set and/or the virtual sample data set to obtain the initial perception model.

In some embodiments, the step that the labeled sample data set and/or the virtual sample data set is acquired includes: road test vehicle data and/or CornerCase data is collected; frame extraction and alignment processing is performed on the road test vehicle data and/or the CornerCase data, and the aligned road test vehicle data and/or CornerCase data is labeled through a 2D image and/or a 3D laser point cloud to obtain a 2D target labeling result, a 2D segmentation labeling result, a 3D target labeling result, and a 3D segmentation labeling result; the 2D target labeling result, the 2D segmentation labeling result, the 3D target labeling result, and the 3D segmentation labeling result are respectively matched with the 2D image and the 3D laser point cloud one by one to obtain a 2D target detection data set, a 2D semantic segmentation data set, a 3D point cloud target detection data set, and a 3D semantic segmentation data set, the labeled sample data set is obtained according to the 2D target detection data set, the 2D semantic segmentation data set, the 3D point cloud target detection data set, and the 3D semantic segmentation data set; and mapping and matching are performed on the 2D target labeling result, the 2D segmentation labeling result, the 3D target labeling result, and the 3D segmentation labeling result according to a preset policy to obtain a 3D position-based labeling result, and the virtual sample data set is constructed by taking the 2D image and the 3D laser point cloud as an input and the 3D position-based labeling result as an output.

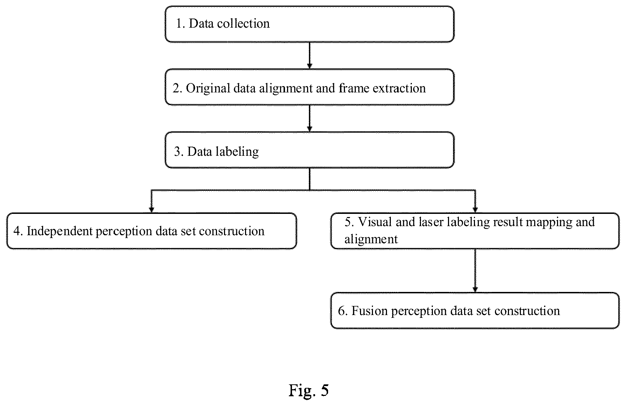

Specifically, as shown in Fig. 5, in the embodiments of the present application, road test vehicle data is collected, or CornerCase data may be collected by mass production of vehicles in a shadow mode, or the road test vehicle data and the CornerCase data may be collected, and frame extraction and alignment are mainly performed on the road test vehicle data and the CornerCase data by temporal synchronization at a vehicle end, so as to ensure that a laser point cloud and a picture of each frame are at the same time. The road test vehicle data and the CornerCase data are fused and labeled through the 2D image and the 3D laser point cloud, or the 2D image and the 3D laser point cloud are respectively labeled to obtain the 2D target labeling result, the 2D segmentation labeling result, the 3D target labeling result, and the 3D segmentation labeling result.

Further, the 2D target labeling result, the 2D segmentation labeling result, the 3D target labeling result, and the 3D segmentation labeling result are respectively matched with the 2D image and the 3D laser point cloud one by one to respectively form a 2D target detection data set, a 2D semantic segmentation data set, a 3D point cloud target detection data set, and a 3D semantic segmentation data set, which may be used for the training of each independent perception algorithm in a post fusion mode. Laser labeling results are mapped and matched from 3D to 2D by using a preset policy, and 2D labeling attributes and 3D labeling attributes are fused to form a 3D position-based labeling result. A virtual sample data set required for the training of a fusion perception algorithm in a pre-fusion mode is constructed by taking the 2D image and the 3D laser point cloud as a model input and the 3D position-based labeling result as a model output.

At step S203, the true value data and the perception prediction data are compared on the basis of an overall recognition error policy and a local recognition error policy, and whether there is a missing recognition target and/or a misrecognition target in the perception prediction data is determined according to a comparison result.

In the embodiments of the present application, each piece of sensor rendering reconstruction data is input into an initial perception model for predicting to obtain a rendering prediction result. An independent perception algorithm may obtain an independent expected perception result of each sensor, and a fusion perception algorithm may obtain a 3D fusion perception result.

For result comparison of the independent perception algorithm, the true value data is mapped to each sensor and then is compared with the perception prediction data of respective perception algorithm, determination is performed through an overall recognition error (mAP) and a local recognition error (for example, an IOU of a single target), and the true value data is classified into different types of hard sample libraries.

Further, for comparison of the fusion perception result, the perception prediction data is directly compared with the true value data, determination is performed through an overall recognition error and a local recognition error (it is to be noted that an obstructed target needs to be recognized and needs to be eliminated if it is abnormal), and the perception prediction data is classified into different types of hard sample libraries.

It is to be noted that, in the embodiments of the present application, repeated and similar scenarios are eliminated in continuous frames according to output hard sample data and hard sample scenarios, and are stored in categories according to the types of abnormal problems. When a hard sample is applied, the hard sample data is directly added to a training sample to generate corresponding target sample data, and initial perception model is iteratively trained until the initial perception model satisfies a preset end condition to obtain a target perception model. Vehicle autonomous driving perception self-learning is performed by using the target perception model.

At step S204, the missing recognition target and/or the misrecognition target is taken as hard sample data and a scenario where the missing recognition target and/or the misrecognition target is located is taken as a hard sample scenario in a case that there is the missing recognition target and/or the misrecognition target, and driving perception self-learning is performed on the initial perception model according to the hard sample data and the hard sample scenario until the initial perception model satisfies a preset learning end condition.

It may be understood that, in the embodiments of the present application, the perception prediction data is compared with the true value data to obtain a comparison result between the perception prediction data and the true value data. On the basis of the overall recognition error policy and a local recognition error policy, in a case that there is the missing recognition target and the misrecognition target, corresponding data is taken as hard sample data, and the scenario where the missing recognition target and the misrecognition target are located is added into a hard sample library as a hard sample scenario. When the data is classified into the hard sample library, the scenario that the data belongs needs to be recorded as the hard sample scenario, including dynamic scenario elements and static scenario elements.

Further, in some embodiments, after the step that whether there is a missing recognition target and/or a misrecognition target in the perception prediction data is determined according to a comparison result, the method further includes: it is determined that the initial perception model satisfies the preset learning end condition in a case that there is no missing recognition target and/or misrecognition target.

It may be understood that it indicates that the initial perception model completes the training of self-learning and satisfies the preset learning end condition in a case that there is no missing recognition target and/or misrecognition target in the perception prediction data and the true value data.

Further, in some embodiments, the step that the driving perception self-learning is performed on the initial perception model according to the hard sample data and the hard sample scenario includes: scenario reconstruction is performed again according to the hard sample scenario, the artificially constructed scenario data, and the real scenario data to obtain a new virtual scenario; and the new virtual scenario is rendered to obtain a new rendering result, and the driving perception self-learning is performed on the initial perception model by taking the new rendering result and the hard sample data as an input of the initial perception model.

In the embodiments of the present application, generalized hard sample scenarios are generated by performing generalization on the scenarios recorded in the hard sample library. The hard sample includes the hard sample data and the hard sample scenario. The hard sample data includes information such as a picture, a point cloud, and labeled information. The hard sample scenario includes static scenario and dynamic scenario information corresponding to the hard sample data. The hard sample scenario needs to be obtained by outputting a data set obtained by a scenario reconstruction engine and a rendering engine, and then is added to a training sample for use.

In the embodiments of the present application, after generalization is performed on a weather model of the hard sample scenario according to the recorded hard sample scenario, hard sample data corresponding to different weather may also be obtained and added to the training data set for use. The generalization of the weather model refers to capability of changing weather types such as sunny, rainy, and foggy, or adjusting the degree of certain weather such as rainfall and visibility.

Specifically, in the embodiments of the present application, the scenario reconstruction is performed again according to the hard sample scenario, the artificially constructed scenario data, and the real scenario data to obtain the new virtual scenario; the new virtual scenario is rendered to obtain the new rendering result; and the new rendering result and the hard sample data are input into the initial perception model to perform driving perception self-learning.

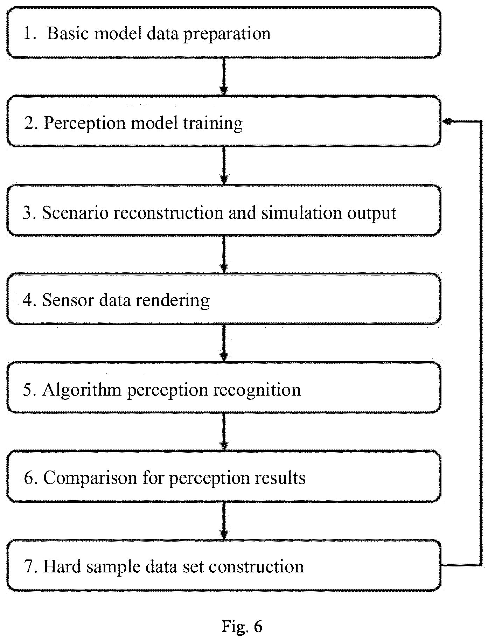

In conclusion, as shown in Fig. 6, the embodiments of the present application prepare data for a basic model. A labeled sample data set and/or a virtual sample data set are acquired and are input into a perception algorithm for training to obtain an initial perception model. A scenario reconstruction engine starts sensor data rendering to obtain a fused perception data set and/or an independent perception data set. Perception prediction data is obtained through an independent perception algorithm or a fusion perception algorithm. The true value data and the perception prediction data are compared to obtain difficult sample data. Driving perception self-learning is performed on the initial perception model according to the hard sample data and the hard sample scenario.

To enable those skilled in the art to further understand the vehicle autonomous driving perception self-learning method of the embodiments of the present application, the following will be described in detail in combination with specific embodiments.

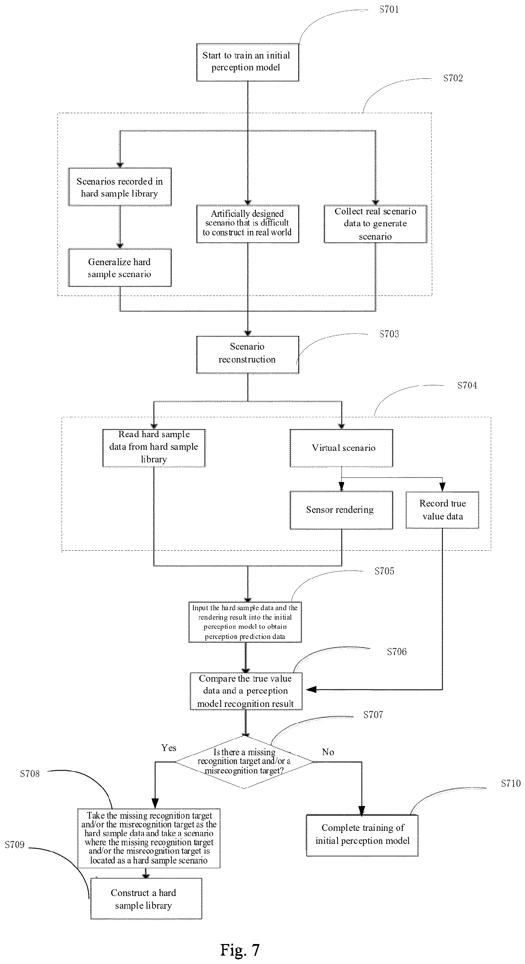

Specifically, as shown in Fig. 7, the vehicle autonomous driving perception self-learning method includes the following steps.

At step S701, an initial perception model is started to be trained.

At step S702, a hard sample scenario, an artificially designed scenario that is difficult to construct in the real world, and real scenario data are acquired to generate real scenario data, and performing generalization on the hard sample scenario.

At step S703, scenario reconstruction is performed according to the generalized hard sample scenario and/or the artificially designed scenario that is difficult to construct in the real world and the collected real scenario data to construct a virtual scenario.

At step S704, hard sample data is read from a hard sample library, and true value data is obtained according to a real position and category of each target in the virtual scenario, and the virtual scenario (including information such as a picture and a point cloud) is rendered through a sensor to obtain a rendering result.

At step S705, the hard sample data and the rendering result are input into the initial perception model to obtain perception prediction data.

It is to be noted that, self-learning of the initial perception model may also be realized while inputting the hard sample data and the rendering result into the initial perception model to obtain the perception prediction data.

At step S706, the true value data and the perception prediction data are compared to obtain a comparison result.

At step S707, whether there is a missing recognition target and/or a misrecognition target in the perception prediction data is determined according to the comparison result. Step S708 is performed in a case that there is the missing recognition target and/or the misrecognition target, and otherwise, step S710 is performed.

At step S708, the missing recognition target and/or the misrecognition target is taken as the hard sample data, and a scenario where the missing recognition target and/or the misrecognition target is located is taken as a hard sample scenario.

At step S709, the hard sample library is constructed according to the hard sample data and the hard sample scenario.

At step S710, training of the initial perception model is completed.

According to the vehicle autonomous driving perception self-learning method provided by the embodiments of the present application, scenario reconstruction is performed according to artificially constructed scenario data and real scenario data to obtain a virtual scenario, and true value data is obtained according to a real position and category of each target in the virtual scenario; the virtual scenario is rendered to obtain a rendering result, and the rendering result is input into an initial perception model to obtain perception prediction data; the true value data and the perception prediction data are compared on the basis of an overall recognition error policy and a local recognition error policy, whether there is a missing recognition target and/or a misrecognition target in the perception prediction data is determined according to a comparison result, the missing recognition target and/or the misrecognition target is taken as hard sample data and a scenario where the missing recognition target and/or the misrecognition target is located is taken as a hard sample scenario in a case that there is the missing recognition target and/or the misrecognition target, and driving perception self-learning is performed on the initial perception model according to the hard sample data and the hard sample scenario until the initial perception model satisfies a preset learning end condition. Therefore, the problems in related technologies that real vehicle data collection and labeling have high costs, cannot be applied to construction of LiDAR and visual data sets, and cannot be used for iteration of perception algorithms are solved, the iteration efficiency of an autonomous driving perception algorithm is improved, and low-cost autonomous driving perception self-learning is realized.

Secondarily, a vehicle autonomous driving perception self-learning apparatus provided according to the embodiments of the present application is described with reference to drawings.

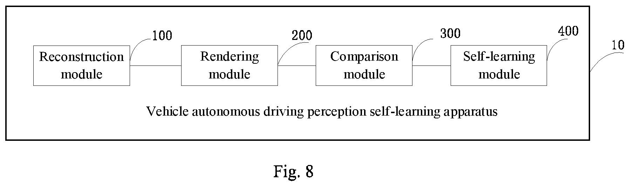

Fig. 8 is a schematic block diagram of a vehicle autonomous driving perception self-learning apparatus according to the embodiments of the present application.

As shown in Fig. 8, the vehicle autonomous driving perception self-learning apparatus 10 includes a reconstruction module 100, a rendering module 200, a comparison module 300, and a self-learning module 400.

The reconstruction module 100 is configured to acquire artificially constructed scenario data and real scenario data, perform scenario reconstruction according to the artificially constructed scenario data and the real scenario data to obtain a virtual scenario, and obtain true value data according to a real position and category of each target in the virtual scenario; the rendering module 200 is configured to render the virtual scenario to obtain a rendering result, and input the rendering result into an initial perception model to obtain perception prediction data; the comparison module 300 is configured to compare the true value data and the perception prediction data on the basis of an overall recognition error policy and a local recognition error policy, and determine whether there is a missing recognition target and/or a misrecognition target in the perception prediction data according to a comparison result; and the self-learning module 400 is configured to take the missing recognition target and/or the misrecognition target as hard sample data and take a scenario where the missing recognition target and/or the misrecognition target is located as a hard sample scenario in a case that there is the missing recognition target and/or the misrecognition target, and perform driving perception self-learning on the initial perception model according to the hard sample data and the hard sample scenario until the initial perception model satisfies a preset learning end condition.

Further, in some embodiments, in addition to performing the driving perception self-learning on the initial perception model according to the hard sample data and the hard sample scenario, the self-learning module 400 is further configured to: perform scenario reconstruction again according to the hard sample scenario, the artificially constructed scenario data, and the real scenario data to obtain a new virtual scenario; and render the new virtual scenario to obtain a new rendering result, and perform the driving perception self-learning on the initial perception model by taking the new rendering result and the hard sample data as an input of the initial perception model.

Further, in some embodiments, after determining whether there is a missing recognition target and/or a misrecognition target in the perception prediction data is determined according to a comparison result, the comparison module 300 is further configured to: determine that the initial perception model satisfies the preset learning end condition in a case that there is no missing recognition target and/or misrecognition target.

Further, in some embodiments, in addition to performing the scenario reconstruction according to the artificially constructed scenario data and the real scenario data to obtain the virtual scenario, the reconstruction module 100 is further configured to: acquire static scenario data in a virtual city map and dynamic scenario data in a scenario database; and perform the scenario reconstruction on the artificially constructed scenario data and the real scenario data according to the static scenario data and the dynamic scenario data to obtain the virtual scenario.

Further, in some embodiments, in addition to rendering the virtual scenario to obtain the rendering result, the rendering module 200 is further configured to: acquire static environment material information and dynamic traffic participant material information on the basis of the virtual scenario; and respectively render the static environment material information and the dynamic traffic participant material information on the basis of a preset rendering policy to obtain the rendering result.

Further, in some embodiments, the preset rendering policy includes at least one of a front view rendering policy, a back view rendering policy, a perimeter rendering policy, a surround view rendering policy, a LiDAR rendering policy, or a millimeter wave radar rendering policy.

Further, in some embodiments, before inputting the rendering result into the initial perception model, the rendering module 200 is further configured to: acquire training sample data, where the training sample data includes a labeled sample data set and/or a virtual sample data set; and train a preset perception network on the basis of the labeled sample data set and/or the virtual sample data set to obtain the initial perception model.

Further, in some embodiments, the rendering module 200 is further configured to: collect road test vehicle data and/or CornerCase data; perform frame extraction and alignment processing on the road test vehicle data and/or the CornerCase data, and label the aligned road test vehicle data and/or CornerCase data through a 2D image and/or a 3D laser point cloud to obtain a 2D target labeling result, a 2D segmentation labeling result, a 3D target labeling result, and a 3D segmentation labeling result; respectively match the 2D target labeling result, the 2D segmentation labeling result, the 3D target labeling result, and the 3D segmentation labeling result with the 2D image and the 3D laser point cloud one by one to obtain a 2D target detection data set, a 2D semantic segmentation data set, a 3D point cloud target detection data set, and a 3D semantic segmentation data set, and obtain the labeled sample data set according to the 2D target detection data set, the 2D semantic segmentation data set, the 3D point cloud target detection data set, and the 3D semantic segmentation data set; and perform mapping and matching on the 2D target labeling result, the 2D segmentation labeling result, the 3D target labeling result, and the 3D segmentation labeling result according to a preset policy to obtain a 3D position-based labeling result, and construct the virtual sample data set by taking the 2D image and the 3D laser point cloud as an input and the 3D position-based labeling result as an output.

Further, in some embodiments, before inputting the rendering result into the initial perception model, the rendering module 200 is further configured to: load static scenario data in a virtual city map and dynamic scenario data in a scenario database to obtain environment information and target information; render a target sensor according to the environment information and the target information to obtain a rendering result, and align the rendering result with the environment information and the target information to obtain alignment data; perform data sampling on the alignment data, and construct a fused perception data set on the basis of sampled data; acquire a 3D target and scenario information of a simulation output, map the 3D target and the scenario information of the simulation output to the rendering result in sequence to obtain a labeling result corresponding to a 2D sensor, and construct an independent perception data set on the basis of the labeling result corresponding to the 2D sensor; and train the preset perception network by taking the fused perception data set and/or the independent perception data set as training sample data to obtain the initial perception model.

It is to be noted that the previously described explanation for the vehicle autonomous driving perception self-learning method is also suitable for the vehicle autonomous driving perception self-learning apparatus, which will not be described in detail here.

According to the vehicle autonomous driving perception self-learning apparatus provided by the embodiments of the present application, scenario reconstruction is performed according to artificially constructed scenario data and real scenario data to obtain a virtual scenario, and true value data is obtained according to a real position and category of each target in the virtual scenario; the virtual scenario is rendered to obtain a rendering result, and the rendering result is input into an initial perception model to obtain perception prediction data; the true value data and the perception prediction data are compared on the basis of an overall recognition error policy and a local recognition error policy, whether there is a missing recognition target and/or a misrecognition target in the perception prediction data is determined according to a comparison result, the missing recognition target and/or the misrecognition target is taken as hard sample data and a scenario where the missing recognition target and/or the misrecognition target is located is taken as a hard sample scenario in a case that there is the missing recognition target and/or the misrecognition target, and driving perception self-learning is performed on the initial perception model according to the hard sample data and the hard sample scenario until the initial perception model satisfies a preset learning end condition. Therefore, the problems in related technologies that real vehicle data collection and labeling have high costs, cannot be applied to construction of LiDAR and visual data sets, and cannot be used for iteration of perception algorithms are solved, the iteration efficiency of an autonomous driving perception algorithm is improved, and low-cost autonomous driving perception self-learning is realized.

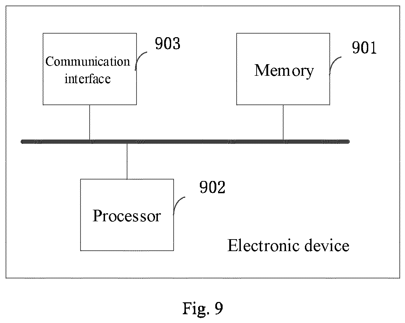

Fig. 9 is a schematic structural diagram of an electronic device provided by an embodiment of the present application. The electronic device may include:
a memory 901, a processor 902, and a computer program stored on the memory 901 and capable of running on the processor 902.

The processor 902 implements the vehicle autonomous driving perception self-learning method provided in the above embodiments when executing the program.

Further, the electronic device further includes:
a communication interface 903, configured for the communication between the memory 901 and the processor 902.

The memory 901 is configured to store a computer program capable of running on the processor 902.

The memory 901 may include a high-speed Random Access Memory (RAM), or may also include a non-volatile memory, for example, at least magnetic disc memory.

If the memory 901, the processor 902, and the communication interface 903 are implemented independently, the communication interface 903, the memory 901, and the processor 902 may be interconnected to one another and complete the communication with one another through a bus. The bus may be an Industry Standard Architecture (ISA) bus, a Peripheral Component (PCI) bus, or an Extended Industry Standard Architecture (EISA) bus. The bus may be classified into an address bus, a data bus, a control bus, or the like. For ease of representation, the bus is only represented by a thick line in Fig. 9, but it does not represent that there is only one bus or one type of bus.

Optionally, in specific implementation, if the memory 901, the processor 902, and the communication interface 903 are integrated on one chip for implementing, communication among the memory 901, the processor 902, and the communication interface 903 may be completed through internal interfaces.

The processor 902 may be a Central Processing Unit (CPU), or an Application Specific Integrated Circuit (ASIC), or is configured to one or more integrated circuits for implementing the embodiments of the present application.

The embodiments of the present application further provide a computer-readable storage medium, which stores a computer program thereon. The vehicle autonomous driving perception self-learning method as described in the above is implemented when the program is executed by a processor.

In the descriptions of the present specification, the descriptions made with reference to terms such as "an embodiment", "some embodiments", "example", "specific example", or "some examples" refer to that specific features, structures, materials or characteristics described in combination with the embodiments or the examples are included in at least one embodiment or example of the present application. In the present specification, schematic representations for the above terms do not necessarily mean the same embodiment or example. Moreover, the described features, structures, materials or characteristics may be combined in a proper manner in any one or N embodiments or examples. In addition, those skilled in the art may integrate and combine different embodiments or examples described in the present specification and features of different embodiments or examples without conflicts.

In addition, terms "first" and "second" are only used for the purpose of describing and cannot be understood as indicating or implying relative importance or implicitly indicating the number of indicated technical features. Therefore, a feature defined by "first" and "second" may explicitly or implicitly include at least one of the features. In the descriptions of the present application, "N" means at least two, for example, two or three, unless otherwise limited definitely and specifically.

Any process or method description described in the flowchart or herein in another manner may be understood as representing including one or N modules, segments or parts for implementing code of executable instructions of steps of specific logic functions or processes, moreover, the scope of a preferred implementation of the present application includes other implementations, which may not be in a sequence shown or discussed herein, and includes execution of the functions basically simultaneously or in a reverse sequence according to the involved functions. This is to be understood by those skilled in the art of the embodiments of the present application.

It is to be understood that each part of the present application may be implemented by hardware, software, firmware or a combination thereof. In the above implementations, N steps or methods may be implemented by software or firmware stored in a memory and executed by a proper instruction execution system. For example, if implemented by the hardware, as in another implementation, any one or a combination of the following technologies well-known in the art may be used for implementing: discrete logic circuits with a logic gate circuit configured to realize a logic function for a data signal, an application-specific integrated circuit with a proper combined logic gate circuit, a Programmable Gate Array (PGA), a Field Programmable Gate Array (FPGA), and the like.

Those of ordinary skill in the art may understand that the implementation of all or part steps in the above embodiment methods may be completed through a program instructing relevant hardware. The program may be stored in a computer-readable storage medium. The program implements one or a combination of steps of the method embodiment when executed.

Although the embodiments of the present application have been shown or described above, it may be understood that the above embodiments are exemplary and cannot be understood as a limitation to the present application. Those of ordinary skill in the art may make variations, modifications, replacements, transformations to the above embodiments within the scope of the present application.

## Claims

1. A vehicle autonomous driving perception self-learning method, comprising the following steps:
acquiring artificially constructed scenario data and real scenario data, performing scenario reconstruction according to the artificially constructed scenario data and the real scenario data to obtain a virtual scenario, and obtaining true value data according to a real position and category of each target in the virtual scenario;
rendering the virtual scenario to obtain a rendering result, and inputting the rendering result into an initial perception model to obtain perception prediction data;
comparing the true value data and the perception prediction data on the basis of an overall recognition error policy and a local recognition error policy, and determining whether there is a missing recognition target and/or a misrecognition target in the perception prediction data according to a comparison result; and
taking the missing recognition target and/or the misrecognition target as hard sample data and taking a scenario where the missing recognition target and/or the misrecognition target is located as a hard sample scenario in a case that there is the missing recognition target and/or the misrecognition target, and performing driving perception self-learning on the initial perception model according to the hard sample data and the hard sample scenario until the initial perception model satisfies a preset learning end condition.

2. The method according to claim 1, wherein the performing driving perception self-learning on the initial perception model according to the hard sample data and the hard sample scenario comprises:
performing scenario reconstruction again according to the hard sample scenario, the artificially constructed scenario data, and the real scenario data to obtain a new virtual scenario; and
rendering the new virtual scenario to obtain a new rendering result, and performing the driving perception self-learning on the initial perception model by taking the new rendering result and the hard sample data as an input of the initial perception model.

3. The method according to claim 1, after the determining whether there is a missing recognition target and/or a misrecognition target in the perception prediction data according to a comparison result, further comprising:
determining that the initial perception model satisfies the preset learning end condition in a case that there is no missing recognition target and/or misrecognition target.

4. The method according to claim 1, wherein the performing scenario reconstruction according to the artificially constructed scenario data and the real scenario data to obtain a virtual scenario comprises:
acquiring static scenario data in a virtual city map and dynamic scenario data in a scenario database; and
performing the scenario reconstruction on the artificially constructed scenario data and the real scenario data according to the static scenario data and the dynamic scenario data to obtain the virtual scenario.

5. The method according to claim 2, wherein the rendering the virtual scenario to obtain a rendering result comprises:
acquiring static environment material information and dynamic traffic participant material information on the basis of the virtual scenario; and
respectively rendering the static environment material information and the dynamic traffic participant material information on the basis of a preset rendering policy to obtain the rendering result.

6. The method according to claim 5, wherein the preset rendering policy comprises at least one of a front view rendering policy, a back view rendering policy, a perimeter rendering policy, a surround view rendering policy, a LiDAR rendering policy, or a millimeter wave radar rendering policy.

7. The method according to claim 1, before the inputting the rendering result into an initial perception model, further comprising:
acquiring training sample data, the training sample data comprising a labeled sample data set and/or a virtual sample data set; and
training a preset perception network on the basis of the labeled sample data set and/or the virtual sample data set to obtain the initial perception model.

8. The method according to claim 7, wherein the acquiring a labeled sample data set and/or a virtual sample data set comprises:
collecting road test vehicle data and/or CornerCase data;
performing frame extraction and alignment processing on the road test vehicle data and/or the CornerCase data, and labeling the aligned road test vehicle data and/or CornerCase data through a 2-Dimensional (2D) image and/or a 3-Dimensional (3D) laser point cloud to obtain a 2D target labeling result, a 2D segmentation labeling result, a 3D target labeling result, and a 3D segmentation labeling result;
respectively matching the 2D target labeling result, the 2D segmentation labeling result, the 3D target labeling result, and the 3D segmentation labeling result with the 2D image and the 3D laser point cloud one by one to obtain a 2D target detection data set, a 2D semantic segmentation data set, a 3D point cloud target detection data set, and a 3D semantic segmentation data set, and obtaining the labeled sample data set according to the 2D target detection data set, the 2D semantic segmentation data set, the 3D point cloud target detection data set, and the 3D semantic segmentation data set; and
performing mapping and matching on the 2D target labeling result, the 2D segmentation labeling result, the 3D target labeling result, and the 3D segmentation labeling result according to a preset policy to obtain a 3D position-based labeling result, and constructing the virtual sample data set by taking the 2D image and the 3D laser point cloud as an input and the 3D position-based labeling result as an output.

9. The method according to claim 7, before the inputting the rendering result into an initial perception model, further comprising:
loading static scenario data in a virtual city map and dynamic scenario data in a scenario database to obtain environment information and target information;
rendering a target sensor according to the environment information and the target information to obtain a rendering result, and aligning the rendering result with the environment information and the target information to obtain alignment data;
performing data sampling on the alignment data, and constructing a fused perception data set on the basis of sampled data;
acquiring a 3D target and scenario information of a simulation output, mapping the 3D target and the scenario information of the simulation output to the rendering result in sequence to obtain a labeling result corresponding to a 2D sensor, and constructing an independent perception data set on the basis of the labeling result corresponding to the 2D sensor; and
training the preset perception network by taking the fused perception data set and/or the independent perception data set as training sample data to obtain the initial perception model.

10. A vehicle autonomous driving perception self-learning apparatus, comprising:
a reconstruction module, configured to acquire artificially constructed scenario data and real scenario data, perform scenario reconstruction according to the artificially constructed scenario data and the real scenario data to obtain a virtual scenario, and obtain true value data according to a real position and category of each target in the virtual scenario;
a rendering module, configured to render the virtual scenario to obtain a rendering result, and input the rendering result into an initial perception model to obtain perception prediction data;
a comparison module, configured to compare the true value data and the perception prediction data on the basis of an overall recognition error policy and a local recognition error policy, and determine whether there is a missing recognition target and/or a misrecognition target in the perception prediction data according to a comparison result; and
a self-learning module, configured to take the missing recognition target and/or the misrecognition target as hard sample data and take a scenario where the missing recognition target and/or the misrecognition target is located as a hard sample scenario in a case that there is the missing recognition target and/or the misrecognition target, and perform driving perception self-learning on the initial perception model according to the hard sample data and the hard sample scenario until the initial perception model satisfies a preset learning end condition.

11. The apparatus according to claim 10, wherein in addition to performing the driving perception self-learning on the initial perception model according to the hard sample data and the hard sample scenario, the self-learning module is further configured to:
perform scenario reconstruction again according to the hard sample scenario, the artificially constructed scenario data, and the real scenario data to obtain a new virtual scenario; and
render the new virtual scenario to obtain a new rendering result, and perform the driving perception self-learning on the initial perception model by taking the new rendering result and the hard sample data as an input of the initial perception model.

12. The apparatus according to claim 10, after determining whether there is a missing recognition target and/or a misrecognition target in the perception prediction data according to the comparison result, the comparison module is further configured to:
determine that the initial perception model satisfies the preset learning end condition in a case that there is no missing recognition target and/or misrecognition target.

13. The apparatus according to claim 10, wherein in addition to performing the scenario reconstruction according to the artificially constructed scenario data and the real scenario data to obtain the virtual scenario, the reconstruction module is further configured to:
acquire static scenario data in a virtual city map and dynamic scenario data in a scenario database; and
perform the scenario reconstruction on the artificially constructed scenario data and the real scenario data according to the static scenario data and the dynamic scenario data to obtain the virtual scenario.

14. The apparatus according to claim 11, wherein in addition to rendering the virtual scenario to obtain the rendering result, the rendering module is further configured to:
acquire static environment material information and dynamic traffic participant material information on the basis of the virtual scenario; and
respectively render the static environment material information and the dynamic traffic participant material information on the basis of a preset rendering policy to obtain the rendering result.

15. The apparatus according to claim 14, wherein the preset rendering policy comprises at least one of a front view rendering policy, a back view rendering policy, a perimeter rendering policy, a surround view rendering policy, a LiDAR rendering policy, or a millimeter wave radar rendering policy.

16. The apparatus according to claim 10, before inputting the rendering result into the initial perception model, the rendering module is further configured to:
acquire training sample data, the training sample data comprising a labeled sample data set and/or a virtual sample data set; and
train a preset perception network on the basis of the labeled sample data set and/or the virtual sample data set to obtain the initial perception model.

17. The apparatus according to claim 16, wherein the rendering module is further configured to:
collect road test vehicle data and/or CornerCase data;
perform frame extraction and alignment processing on the road test vehicle data and/or the CornerCase data, and label the aligned road test vehicle data and/or CornerCase data through a 2-Dimensional (2D) image and/or a 3-Dimensional (3D) laser point cloud to obtain a 2D target labeling result, a 2D segmentation labeling result, a 3D target labeling result, and a 3D segmentation labeling result;
respectively match the 2D target labeling result, the 2D segmentation labeling result, the 3D target labeling result, and the 3D segmentation labeling result with the 2D image and the 3D laser point cloud one by one to obtain a 2D target detection data set, a 2D semantic segmentation data set, a 3D point cloud target detection data set, and a 3D semantic segmentation data set, and obtain the labeled sample data set according to the 2D target detection data set, the 2D semantic segmentation data set, the 3D point cloud target detection data set, and the 3D semantic segmentation data set; and
perform mapping and matching on the 2D target labeling result, the 2D segmentation labeling result, the 3D target labeling result, and the 3D segmentation labeling result according to a preset policy to obtain a 3D position-based labeling result, and construct the virtual sample data set by taking the 2D image and the 3D laser point cloud as an input and the 3D position-based labeling result as an output.

18. The apparatus according to claim 16, before inputting the rendering result into the initial perception model, the rendering module is further configured to:
load static scenario data in a virtual city map and dynamic scenario data in a scenario database to obtain environment information and target information;
render a target sensor according to the environment information and the target information to obtain a rendering result, and align the rendering result with the environment information and the target information to obtain alignment data;
perform data sampling on the alignment data, and construct a fused perception data set on the basis of sampled data;
acquire a 3D target and scenario information of a simulation output, map the 3D target and the scenario information of the simulation output to the rendering result in sequence to obtain a labeling result corresponding to a 2D sensor, and construct an independent perception data set on the basis of the labeling result corresponding to the 2D sensor; and
train the preset perception network by taking the fused perception data set and/or the independent perception data set as training sample data to obtain the initial perception model.

19. An electronic device, comprising a memory, a processor, and a computer program stored on the memory and capable of running on the processor, wherein the processor executes the program to implement the vehicle autonomous driving perception self-learning method according to any one of claims 1 to 9.

20. A computer-readable storage medium, storing a computer program thereon, wherein the program is executed by a processor to implement the vehicle autonomous driving perception self-learning method according to any one of claims 1 to 9.
